# FASCICULE DE BREVET EUROPEEN

(11) **EP 3 718 841 B1**
(45) Date de publication et mention de la délivrance du brevet: **31.08.2022**
(21) Numéro de dépôt: 20166520.5
(22) Date de dépôt: 27.03.2020
(51) Int. Cl.: B60T 8/17, B60T 8/32

(54) **SYSTÈME DE FREINAGE D'UNE ROUE D'AERONEF, CONFIGURABLE SELON UN MODE NORMAL OU SELON UN MODE RTO**
BREMSSYSTEM EINES LUFTFAHRZEUGRADS, DAS GEMÄSS NORMAL-MODUS ODER RTO-MODUS EINGESTELLT WERDEN KANN
BRAKING SYSTEM OF AN AIRCRAFT WHEEL, CONFIGURABLE ACCORDING TO A NORMAL MODE OR ACCORDING TO AN RTO MODE

(30) Priorité: 01.04.2019 FR 1903459
(43) Date de publication de la demande: 07.10.2020
(73) Titulaire: Safran Landing Systems, 78140 Vélizy-Villacoublay (FR)
(72) Inventeur: RICHARD, Nathanaël, 77550 MOISSY-CRAMAYEL (FR); PRESLE, Romain, 77550 MOISSY-CRAMAYEL (FR)
(74) Mandataire: Lavaud, Thomas

(56) Documents cités:
- EP-A1- 3 296 170
- EP-A1- 3 428 022
- WO-A1-2010/088396
- WO-A2-2007/084449
- US-A1- 2008 154 445

## Description

L'invention concerne le domaine des systèmes de freinage électriques d'aéronefs.

### ARRIERE PLAN DE L'INVENTION

Un système de freinage électrique d'aéronef comporte des freins associés à des roues dites « freinées » de l'aéronef.

Le frein d'une roue freinée comporte des organes de friction, par exemple une pile de disques de carbone, et des actionneurs électromécaniques montés sur un porte-actionneurs et agencés pour appliquer un effort de freinage commandé sur la pile de disques pour freiner la roue.

Le système de freinage électrique comporte aussi des moyens de commande qui, à partir d'une consigne de freinage produite par un pilote de l'aéronef ou par un système de pilotage automatique, produisent des courants de pilotage à destination des moteurs électriques des actionneurs électromécaniques. Les moyens de commande comprennent des équipements électriques (unités de commande, calculateurs, contrôleurs, etc.) dont le nombre et la position dans l'aéronef dépendent du nombre de roues freinées et de l'architecture du système de freinage électrique, qui est plus ou moins centralisée ou distribuée. WO2007/084449 A2 divulgue un système comportant deux modes avec une première paire d'actionneurs de frein électrique associée à une gamme de faible force de serrage de freins réagissant à des commandes de faible force de serrage de freins et une seconde paire d'actionneurs de frein électrique associée à une gamme de force élevée de serrage de freins sensible à des commandes de force élevée de serrage de freins.

Le système de freinage électrique est principalement utilisé pour freiner l'aéronef lorsqu'il roule sur la piste suite à son atterrissage, pendant le roulage de manière générale, et lors du parking de l'aéronef.

Le freinage de l'aéronef suite à son atterrissage et pendant le roulage est commandé par le pilote grâce des pédales équipant le cockpit. Pour réaliser le freinage de parc, chaque actionneur électromécanique de chaque frein comprend un organe de freinage de parc qui permet de bloquer le rotor du moteur électrique dudit actionneur électromécanique après qu'un effort de freinage a été exercé sur la pile de disques.

A de rares occasions, le système de freinage électrique peut aussi être utilisé pour interrompre un décollage. On utilise généralement le sigle RTO (pour *Rejected TakeOff*) pour désigner une interruption de décollage. Le RTO consiste à interrompre le décollage lorsque l'aéronef est au sol et roule pour décoller. On appelle vitesse V1 la vitesse au sol maximale de l'aéronef à laquelle un RTO peut être effectué. Au-delà de la vitesse V1, il n'est plus possible d'interrompre le décollage.

Un RTO est une situation pouvant être très sévère pour les freins, puisque les freins doivent freiner l'aéronef alors que l'aéronef est chargé au maximum et roule à une vitesse qui peut être importante.

Les actionneurs électromécaniques, en particulier, doivent produire un effort de freinage très élevé et sont donc soumis à de très fortes contraintes.

Les actionneurs électromécaniques sont conçus pour supporter les contraintes d'un RTO. C'est généralement le cas d'un RTO à énergie maximale qui définit la borne haute du domaine d'effort applicable sur le frein par les actionneurs électromécaniques.

Les actionneurs électromécaniques sont donc dimensionnés pour produire un effort opérationnel limite correspondant à un cas de RTO à énergie maximale, et sont par conséquent relativement lourds et volumineux.

L'aéronef embarque donc en permanence des actionneurs électromécaniques « surdimensionnés », de masse et d'encombrement importants, en prévision d'un événement relativement rare suite auquel les actionneurs électromécaniques sont généralement rebutés.

### OBJET DE L'INVENTION

L'invention a pour objet de réduire la masse et l'encombrement d'un système de freinage électrique d'un aéronef.

### RESUME DE L'INVENTION

En vue de la réalisation de ce but, on propose un système de freinage électrique d'une roue d'aéronef, comportant :
- un frein comprenant des organes de friction et au moins un actionneur électromécanique conçu de sorte que, lorsqu'il applique sur les organes de friction un effort de freinage commandé inférieur ou égal à un premier seuil maximum, aucune dégradation fonctionnelle ou structurelle de l'actionneur électromécanique ne se produit, et lorsqu'il applique sur les organes de friction un effort de freinage commandé supérieur au premier seuil maximum mais inférieur ou égal à un deuxième seuil maximum, une dégradation fonctionnelle et/ou structurelle est susceptible de se produire sans empêcher l'actionneur électromécanique d'appliquer l'effort de freinage commandé ;
- des moyens de commande agencés pour produire un courant de pilotage à destination d'un moteur électrique de l'actionneur électromécanique.

Les moyens de commande sont configurables selon un premier mode, dans lequel le courant de pilotage est tel que l'effort de freinage commandé ne peut dépasser le premier seuil maximum, et selon un deuxième mode, dans lequel le courant de pilotage est tel que l'effort de freinage commandé peut atteindre le deuxième seuil maximum.

Le système de freinage électrique comporte en outre des moyens de configuration agencés pour configurer les moyens de commande selon le deuxième mode dans une situation précédant une possible interruption de décollage (RTO) de l'aéronef, et selon le premier mode sinon.

Ainsi, lorsque les moyens de commande sont configurés selon le premier mode, qui correspond à un freinage normal, l'actionneur électromécanique est piloté pour produire un effort de freinage commandé inférieur ou égal au premier seuil maximum. L'effort de freinage commandé est suffisant pour un freinage normal et ne provoque aucune dégradation de l'actionneur électromécanique.

Par contre, lorsque les moyens de commande sont configurés selon le deuxième mode, qui correspond à un cas de RTO, l'actionneur électromécanique est piloté pour produire un effort de freinage commandé qui peut atteindre le deuxième seuil maximum. L'effort de freinage commandé permet de réaliser un RTO à énergie maximale. L'actionneur électromécanique peut être dégradé (tout en assurant que le freinage est réalisé de manière efficace), ce qui n'est pas problématique, car l'actionneur électromécanique sera inspecté et éventuellement rebuté après le RTO.

On a donc optimisé le système de freinage électrique en adaptant le dimensionnement de l'actionneur électromécanique à son usage réel. Le cas du RTO à énergie maximale ne correspond plus à un effort opérationnel limite que doit produire normalement l'actionneur électromécanique, mais à un effort ultime. Ce dimensionnement permet de réduire la masse, l'encombrement et le coût de l'actionneur électromécanique et donc du système de freinage électrique, sans dégrader les performances du système de freinage électrique.

On propose de plus un système de freinage électrique tel que précédemment décrit, dans lequel les moyens de configuration sont agencés pour configurer les moyens de commande selon le deuxième mode avant chaque décollage de l'aéronef.

On propose aussi un système de freinage électrique tel que précédemment décrit, dans lequel les moyens de configuration sont agencés pour configurer les moyens de commande selon le deuxième mode au cours de chaque décollage, lorsqu'une vitesse au sol de l'aéronef dépasse un seuil de vitesse prédéterminé.

On propose de plus un système de freinage électrique tel que précédemment décrit, dans lequel les moyens de configuration sont agencés pour modifier une loi de freinage mise en œuvre dans les moyens de commande pour configurer les moyens de commande.

On propose de plus un système de freinage électrique tel que précédemment décrit, dans lequel la modification de la loi de freinage consiste à modifier des paramètres de la loi de freinage, lesdits paramètres comprenant une commande maximale qui limite une commande d'effort destinée à commander l'actionneur électromécanique, et un seuil de saturation d'une commande de courant du moteur électrique de l'actionneur électromécanique.

On propose en outre un aéronef comprenant un système de freinage électrique tel que précédemment décrit.

On propose de plus un procédé de freinage mis en œuvre dans un système de freinage électrique tel que précédemment décrit, comprenant les étapes de :
- détecter si l'aéronef se trouve ou non dans une situation précédant une possible interruption de décollage (RTO) de l'aéronef ;
- si l'aéronef ne se trouve pas dans une telle situation, faire configurer les moyens de commande par les moyens de configuration selon le premier mode ;
- si l'aéronef se trouve dans une telle situation, faire configurer les moyens de commande par les moyens de configuration selon le deuxième mode.

L'invention sera mieux comprise à la lumière de la description qui suit d'un mode de mise en œuvre particulier non limitatif de l'invention.

### BREVE DESCRIPTION DES DESSINS

Il sera fait référence aux dessins annexés, parmi lesquels :
[Fig.1]

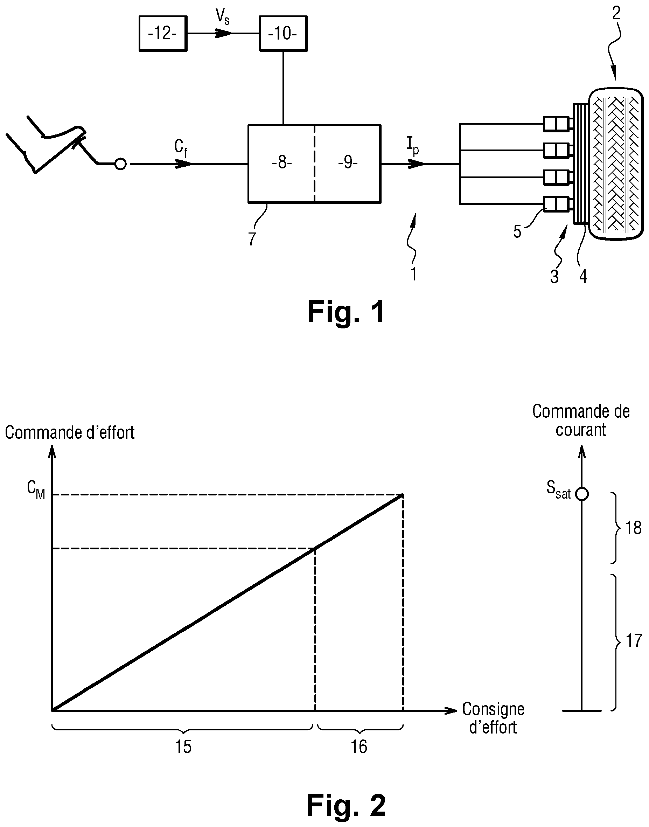

   la figure 1 représente le système de freinage électrique selon l'invention ;
[Fig.2]
   la figure 2 représente, pour un système de freinage électrique de l'art antérieur, un premier graphique comprenant une courbe d'une commande d'effort d'un actionneur électromécanique en fonction d'une consigne d'effort, et un deuxième graphique représentant des niveaux d'une commande de courant du moteur de l'actionneur électromécanique en fonction du type de freinage ;
[Fig.3]

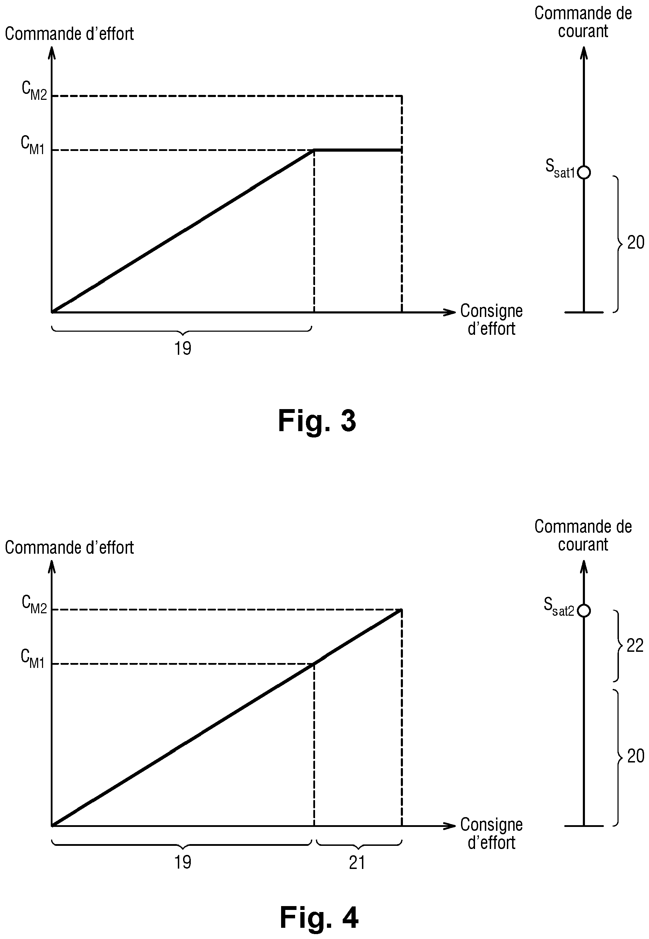

   la figure 3 représente des graphiques similaires à ceux de la figure 2 dans le cas d'un système de freinage électrique selon l'invention, les moyens de commande étant configurés selon un premier mode ;
[Fig.4]
   la figure 4 représente des graphiques similaires à ceux de la figure 2 dans le cas d'un système de freinage électrique selon l'invention, les moyens de commande étant configurés selon un deuxième mode.

### DESCRIPTION DETAILLEE DE L'INVENTION

En référence à la figure 1, le système de freinage électrique selon l'invention 1 est ici intégré dans un avion et est utilisé pour freiner des roues freinées 2 de l'avion et donc l'avion lui-même.

Le système de freinage électrique 1 est configurable selon le type de freinage commandé et, plus particulièrement, selon que le freinage commandé est un freinage normal, c'est-à-dire un freinage suite à un atterrissage, au cours du roulage de l'avion ou pour le parking, ou bien un freinage destiné à interrompre un décollage (RTO).

Le système de freinage électrique 1 comporte tout d'abord une pluralité de freins 3, chaque frein 3 étant associé à une roue freinée 2.

Le frein 3 comprend des organes de friction, en l'occurrence une pile de disques de carbone 4, et une pluralité d'actionneurs électromécaniques 5 portés par un porte-actionneurs.

Chaque actionneur électromécanique 5 comprend un moteur électrique et un poussoir apte à être déplacé par le moteur électrique pour presser la pile de disques 4. L'actionneur électromécanique 5 est ainsi destiné à produire un effort de freinage commandé sur la pile de disques 4.

Chaque actionneur électromécanique 5 est conçu et dimensionné d'une manière bien particulière et propre à l'invention.

Chaque actionneur électromécanique 5 est conçu de sorte que, lorsqu'il applique sur la pile de disques 4 un effort de freinage commandé inférieur ou égal à un premier seuil maximum, aucune dégradation fonctionnelle ou structurelle de l'actionneur électromécanique 5 ne se produit.

Cela signifie tout d'abord que, après le freinage, les performances fonctionnelles de l'actionneur électromécanique 5 correspondent à ses performances fonctionnelles d'avant le freinage.

Par « performances fonctionnelles », on entend les performances liées à la fonction primaire de l'actionneur électromécanique 5, qui est de produire un effort de freinage commandé à partir d'un courant de pilotage fourni à son moteur électrique, mais aussi les performances en matière de fiabilité, de durée de vie, de disponibilité, de tenue dans le temps aux contraintes extérieures, etc.

Cela signifie aussi que le freinage ne produit aucun endommagement mécanique irréversible sur la structure de tous les composants, mécaniques ou électriques, de l'actionneur électromécanique 5.

Le premier seuil maximum est donc un effort opérationnel limite que peut générer l'actionneur électromécanique 5 lorsqu'il fonctionne dans une plage de fonctionnement normale. La plage de fonctionnement normale correspond à un freinage normal, c'est-à-dire un freinage suite à un atterrissage, au cours du roulage et pour le parking de l'avion.

Par contre, lorsque l'actionneur électromécanique 5 applique sur la pile de disques 4 un effort de freinage commandé supérieur au premier seuil maximum mais inférieur ou égal à un deuxième seuil maximum, une dégradation fonctionnelle et/ou structurelle est susceptible de se produire, sans pour autant empêcher l'actionneur électromécanique 5 d'appliquer l'effort de freinage commandé.

Le deuxième seuil maximum correspond à une borne maximale d'effort qu'un actionneur électromécanique 5 est susceptible de produire au cours d'un freinage ayant pour but d'interrompre un décollage. Le deuxième seuil maximum permet de réaliser un RTO à énergie maximale.

La dégradation a un impact « mineur » : l'actionneur électromécanique 5 produit bien l'effort de freinage commandé et permet de mettre en œuvre le RTO mais, suite au freinage, l'actionneur électromécanique 5 doit être contrôlé et éventuellement rebuté à cause de la dégradation qu'il a subie.

Le deuxième seuil maximum correspond donc à un effort de freinage « ultime » de l'actionneur électromécanique 5. Ainsi, lors d'un RTO, l'actionneur électromécanique 5 va produire un effort de freinage commandé qui peut atteindre le deuxième seuil maximum, ce qui risque d'endommager l'actionneur électromécanique 5. Tant que l'effort de freinage commandé est inférieur ou égal au deuxième seuil maximum, l'actionneur électromécanique 5 est capable de produire l'effort de freinage commandé malgré l'éventuelle dégradation, de sorte que, pour l'avion, la réalisation de la fin du cycle RTO est garantie.

Le dimensionnement qui vient d'être décrit permet de réduire la masse, l'encombrement et le coût d'un actionneur électromécanique 5 par rapport à un actionneur électromécanique de l'art antérieur dimensionné pour produire un effort opérationnel limite égal au deuxième seuil maximum.

Ce dimensionnement est notamment basé sur des spécifications « mécaniques » moins exigeantes.

La limite d'élasticité acceptable et exigée des composants mécaniques de l'actionneur électromécanique 5 est abaissée, ce qui permet de réduire leur volume et leur masse.

Le moteur électrique est aussi une source d'optimisation possible. Il serait envisageable de réduire le volume du moteur électrique. En effet, dans le cas d'un RTO à énergie maximale, le moteur électrique subit un échauffement très important. Le moteur électrique doit présenter un volume important pour pouvoir supporter sans aucune dégradation cet échauffement.

Ici, comme une dégradation est acceptable, on peut réduire le volume du moteur électrique.

Le système de freinage électrique 1 comprend de plus des moyens de commande 7. Les moyens de commande 7 pilotent un ou des actionneurs électromécaniques 5 positionnés sur un ou plusieurs freins 3.

Les moyens de commande 7 comprennent un ou plusieurs équipements électriques, dans lesquels sont mis en œuvre un module de contrôle 8 et un module de puissance 9.

Le module de contrôle 8 met en œuvre des lois de freinage comprenant une ou plusieurs boucles d'asservissement. Ici, les boucles d'asservissement comprennent un asservissement en effort (en couple par exemple) et un asservissement en courant. Le module de puissance 9 comporte un ou des onduleurs pour produire des courants de pilotage à destination du ou des actionneurs électromécaniques 5.

Le module de contrôle 8 acquiert une consigne de freinage C_{f} qui est produite par exemple par le pilote de l'avion grâce aux pédales.

Puis, le module de contrôle 8 convertit la consigne de freinage C_{f} en des consignes d'effort destinées chacune à commander un actionneur électromécanique 5.

Pour chaque actionneur électromécanique 5, le module de contrôle 8 transforme la consigne d'effort en une commande d'effort, qui elle-même est convertie en une consigne de courant à partir de laquelle est produite une commande de courant.

Le module de puissance 9 acquiert la commande de courant et génère à partir de la commande de courant et d'une alimentation (provenant d'un bus de puissance cheminant dans l'avion) un courant de pilotage Iₚ effectivement transmis au moteur électrique de l'actionneur électromécanique 5.

Le courant de pilotage Iₚ commande l'actionneur électromécanique 5 pour que celui-ci produise un effort de freinage commandé.

Par « courant de pilotage », ou entend un courant continu ou alternatif ou bien des courants multiphasés.

Les moyens de commande 7 sont configurables selon un premier mode, dans lequel le courant de pilotage Iₚ est tel que l'effort de freinage commandé ne peut dépasser le premier seuil maximum, et selon un deuxième mode, dans lequel le courant de pilotage est tel que l'effort de freinage commandé peut atteindre le deuxième seuil maximum.

Le premier mode est utilisé pour un freinage normal, et le deuxième mode pour un freinage ayant pour but d'interrompre un décollage.

La configuration des moyens de commande 7 est modifiée par une modification d'une loi de freinage mise en œuvre dans le module de contrôle 8 des moyens de commande 7. La modification de la loi de freinage consiste à modifier des paramètres de la loi de freinage. Ces paramètres comprennent une commande maximale qui limite la commande d'effort destinée à piloter l'actionneur électromécanique 5, et un seuil de saturation de la commande de courant. Ainsi, le premier mode est caractérisé par une première loi de freinage définie avec une première commande maximale et un premier seuil de saturation.

Lorsque les moyens de commande 7 sont configurés selon le premier mode, la commande d'effort produite par le module de contrôle 8 à partir de la consigne de freinage est bornée par la première commande maximale et ne peut donc pas la dépasser.

La commande de courant est saturée par le premier seuil de saturation. Tant que la commande de courant demeure inférieure ou égale au premier seuil de saturation, une augmentation de la commande de courant provoque une augmentation du courant de pilotage. Lorsque la commande de courant atteint le premier seuil de saturation, le courant de pilotage n'augmente plus.

Le premier seuil de saturation assure qu'une commande d'effort égale à la première commande maximale peut être atteinte mais ne peut pas être dépassée. Le premier seuil de saturation sécurise la commande : même si la commande d'effort dépasse la première commande maximale, la commande de courant ne peut dépasser le premier seuil de saturation de sorte que l'effort de freinage commandé appliqué par l'actionneur électromécanique 5 ne peut dépasser le premier seuil maximum.

De même, le deuxième mode est caractérisé par une deuxième loi de freinage définie avec une deuxième commande maximale et un deuxième seuil de saturation. Le deuxième seuil de saturation assure qu'une commande d'effort égale à la deuxième commande maximale peut être atteinte.

La deuxième commande maximale est supérieure à la première commande maximale, typiquement de 10% à 30%, de préférence de 20% environ.

Le système de freinage électrique 1 comporte de plus des moyens de configuration 10.

Les moyens de configuration 10 configurent les moyens de commande 7 selon le deuxième mode dans une situation précédant une possible interruption de décollage (RTO) de l'aéronef, et selon le premier mode sinon.

On peut prévoir que les moyens de configuration 10 configurent les moyens de commande 7 selon le deuxième mode avant chaque décollage de l'avion, automatiquement. Ainsi, à tout instant au cours du décollage, une commande d'effort pouvant atteindre la deuxième commande maximale est disponible pour freiner l'avion.

Alternativement, on peut prévoir que les moyens de configuration 10 configurent les moyens de commande 7 selon le deuxième mode au cours du décollage de l'avion, lorsque la vitesse au sol de l'avion dépasse un seuil de vitesse prédéterminé. Pour valider cette condition, on utilise avantageusement une mesure de la vitesse au sol Vₛ de l'avion produite par une centrale inertielle 12 de l'avion, qui est plus précise et plus fiable qu'une mesure de vitesse produite par les tachymètres équipant les roues freinées 2.

On note que, lorsqu'une commande d'effort supérieure à la première commande maximale est produite par les moyens de commande 7, un message de maintenance est généré. Le message de maintenance indique qu'un RTO vient d'avoir lieu et que l'actionneur électromécanique 5 doit subir une inspection. L'actionneur électromécanique 5 est contrôlé et rebuté si nécessaire. Par contre, tant que la première commande maximale n'est pas dépassée, une inspection n'est pas nécessaire.

On illustre ce qui vient d'être dit à l'aide des graphiques des figures 2 à 4.

La figure 2 concerne un système de freinage électrique de l'art antérieur.

Une unique loi de freinage est utilisée. La commande d'effort augmente tant que la consigne d'effort augmente. La commande d'effort est limitée par une unique commande maximale C_{M}. La commande de courant est saturée par un unique seuil de saturation Sₛₐₜ qui permet à l'effort de freinage commandé produit par l'actionneur électromécanique d'atteindre la commande maximale C_{M} sans la dépasser.

La plage totale qui borne la consigne d'effort comprend une plage nominale 15 et une plage supplémentaire 16 prévue pour le cas du RTO.

Comme la plage supplémentaire 16 correspond à une commande d'effort inférieure ou égale à l'unique commande maximale C_{M}, cette plage est accessible au pilote quel que soit le freinage.

De même, la plage totale qui borne la commande de courant comprend une plage nominale 17 et une plage supplémentaire 18 prévue pour le cas du RTO.

L'unique seuil de saturation Sₛₐₜ n'empêche donc pas, au cours d'un freinage normal, d'avoir une commande de courant qui correspond à la plage supplémentaire 18 prévue pour le cas du RTO.

Le pilote peut donc commander, au moment d'un freinage normal, un effort de freinage dans une plage d'effort prévue pour un cas de RTO, ce qui est inutile et risque d'user prématurément les freins. De plus, les actionneurs électromécaniques sont surdimensionnés, puisqu'ils sont dimensionnés pour produire sans dommage un effort de freinage commandé correspondant à la commande maximale C_{M} (et donc à un RTO à énergie maximale), suite auquel ils sont généralement rebutés.

La figure 3 concerne le système de freinage électrique selon l'invention 1, lorsque les moyens de commande 7 sont configurés selon le premier mode.

On voit que la commande d'effort est limitée par la première commande maximale C_{M1}, et que la commande de courant est limitée par le premier seuil de saturation Sₛₐₜ₁.

Au cours d'un freinage normal, même si la consigne d'effort va au-delà de la plage nominale 19, la commande d'effort ne peut aller au-delà de la première commande maximale C_{M1}. La commande de courant ne peut dépasser la plage nominale 20 à cause du premier seuil de saturation Sₛₐₜ₁.

Ainsi, en dehors des cas de RTO, la commande d'effort pour piloter un actionneur électromécanique 5 ainsi que la commande de courant sont réglées en accord avec les performances de freinage requises pour un freinage normal, c'est-à-dire pour un freinage suite à un atterrissage, un freinage au cours du roulage et un freinage pour le parking de l'avion. Le pilote ne peut donc plus commander, au moment d'un freinage normal, un effort de freinage dans une plage d'effort prévue pour un cas de RTO.

La figure 4 concerne le système de freinage électrique selon l'invention 1, lorsque les moyens de commande 7 sont configurés selon le deuxième mode.

En prévision d'un possible RTO, la borne haute de la commande d'effort est relevée pour atteindre la deuxième commande maximale C_{M2} et la limitation du courant de pilotage est relevée de sorte que la commande de courant peut atteindre le deuxième seuil de saturation Sₛₐₜ₂.

Au cours d'un RTO, lorsque la consigne d'effort atteint la plage supplémentaire 21, la commande d'effort continue à croître et peut atteindre la deuxième commande maximale C_{M2}. La commande de courant peut atteindre la plage supplémentaire 22.

Le pilote peut donc cette fois commander un effort de freinage qui atteint la deuxième commande maximale C_{M2}, et qui lui permet de freiner l'avion en cas de RTO à énergie maximale.

Bien entendu, l'invention n'est pas limitée au mode de réalisation décrit mais englobe toute variante entrant dans le champ de l'invention telle que définie par les revendications.

L'architecture du système de freinage électrique présentée ici est relativement simple. Il est bien évident que les moyens de commande peuvent être mis en œuvre dans un ou plusieurs équipements électriques et dans tout type d'architecture. Le module de contrôle et le module de pilotage peuvent appartenir à un même équipement électrique, mais pas nécessairement. Les moyens de configuration peuvent appartenir au même équipement électrique que les moyens de commande, ou bien être intégrés dans les moyens de commande (il peut s'agir d'une partie du logiciel implémenté dans les moyens de commande), mais pas nécessairement.

## Revendications

1. Système de freinage électrique (1) d'une roue (2) d'aéronef, comportant :
- un frein (3) comprenant des organes de friction (4) et au moins un actionneur électromécanique (5) conçu de sorte que, lorsqu'il applique sur les organes de friction (4) un effort de freinage commandé inférieur ou égal à un premier seuil maximum, aucune dégradation fonctionnelle ou structurelle de l'actionneur électromécanique (5) ne se produit, et lorsqu'il applique sur les organes de friction (4) un effort de freinage commandé supérieur au premier seuil maximum mais inférieur ou égal à un deuxième seuil maximum, une dégradation fonctionnelle et/ou structurelle est susceptible de se produire sans empêcher l'actionneur électromécanique (5) d'appliquer l'effort de freinage commandé ;
- des moyens de commande (7) agencés pour produire un courant de pilotage à destination d'un moteur électrique de l'actionneur électromécanique (5),
dont les moyens de commande (7) sont configurables selon un premier mode, dans lequel le courant de pilotage est tel que l'effort de freinage commandé ne peut dépasser le premier seuil maximum, et selon un deuxième mode, dans lequel le courant de pilotage est tel que l'effort de freinage commandé peut atteindre le deuxième seuil maximum,
et en ce que le système de freinage électrique comporte des moyens de configuration (10) agencés pour configurer les moyens de commande (7) selon le deuxième mode dans une situation précédant une possible interruption de décollage (RTO) de l'aéronef, et selon le premier mode sinon.

2. Système de freinage électrique selon la revendication 1, dans lequel les moyens de configuration (10) sont agencés pour configurer les moyens de commande (7) selon le deuxième mode avant chaque décollage de l'aéronef.

3. Système de freinage électrique selon la revendication 1, dans lequel les moyens de configuration (10) sont agencés pour configurer les moyens de commande (7) selon le deuxième mode au cours de chaque décollage, lorsqu'une vitesse au sol (Vₛ) de l'aéronef dépasse un seuil de vitesse prédéterminé.

4. Système de freinage électrique selon l'une des revendications précédentes, dans lequel les moyens de configuration (10) sont agencés pour modifier une loi de freinage mise en œuvre dans les moyens de commande (7) pour configurer les moyens de commande (7).

5. Système de freinage électrique selon la revendication 4, dans lequel la modification de la loi de freinage consiste à modifier des paramètres de la loi de freinage, lesdits paramètres comprenant une commande maximale (C_{M1}, C_{M2}) qui limite une commande d'effort destinée à commander l'actionneur électromécanique (5), et un seuil de saturation (Sₛₐₜ₁, Sₛₐₜ₂) d'une commande de courant du moteur électrique de l'actionneur électromécanique.

6. Aéronef comprenant un système de freinage électrique selon l'une des revendications précédentes.

7. Procédé de freinage mis en œuvre dans un système de freinage électrique selon l'une des revendications 1 à 5, comprenant les étapes de :
- détecter si l'aéronef se trouve ou non dans une situation précédant une possible interruption de décollage (RTO) de l'aéronef ;
- si l'aéronef ne se trouve pas dans une telle situation, faire configurer les moyens de commande (7) par les moyens de configuration (10) selon le premier mode ;
- si l'aéronef se trouve dans une telle situation, faire configurer les moyens de commande (7) par les moyens de configuration (10) selon le deuxième mode.

## Patentansprüche

1. Elektrisches Bremssystem (1) zum Bremsen eines Rades (2) eines Luftfahrzeugs, umfassend:
- eine Bremse (3), die Reibelemente (4) und mindestens einen elektromechanischen Aktor (5) umfasst, der derart ausgebildet ist, dass, wenn er auf die Reibelemente (4) eine gesteuerte Bremskraft aufbringt, die kleiner oder gleich einem ersten maximalen Schwellenwert ist, keine funktionale oder strukturelle Degradation des elektromechanischen Aktors (5) auftritt, und wenn er auf die Reibelemente (4) eine gesteuerte Bremskraft aufbringt, die größer als der erste maximale Schwellenwert, aber kleiner oder gleich einem zweiten maximalen Schwellenwert ist, eine funktionale und/oder strukturelle Degradation wahrscheinlich auftritt, ohne jedoch zu verhindern, dass der elektromechanische Aktor (5) die gesteuerte Bremskraft aufbringt;
- Steuermittel (7), die ausgebildet sind, um einen Steuerstrom mit Ziel eines Elektromotors des elektromechanischen Aktors (5) zu erzeugen, wobei die Steuermittel (7) gemäß einem ersten Modus konfigurierbar sind, in dem der Steuerstrom derart ist, dass die gesteuerte Bremskraft den ersten maximalen Schwellenwert nicht überschreiten kann, sowie gemäß einem zweiten Modus, in dem der Steuerstrom derart ist, dass die gesteuerte Bremskraft den zweiten maximalen Schwellenwert erreichen kann,
und dass das elektrische Bremssystem Konfigurationsmittel (10) umfasst, die ausgebildet sind, um die Steuermittel (7) in einer Situation, die einem möglichen Startabbruch (RTO) des Luftfahrzeugs vorausgeht, gemäß dem zweiten Modus zu konfigurieren, und andernfalls gemäß dem ersten Modus.

2. Elektrisches Bremssystem nach Anspruch 1, bei dem die Konfigurationsmittel (10) ausgebildet sind, um die Steuermittel (7) vor jedem Start des Luftfahrzeugs gemäß dem zweiten Modus zu konfigurieren.

3. Elektrisches Bremssystem nach Anspruch 1, bei dem die Konfigurationsmittel (10) ausgebildet sind, um die Steuermittel (7) während jedes Starts gemäß dem zweiten Modus zu konfigurieren, wenn eine Geschwindigkeit am Boden (Vₛ) des Luftfahrzeugs einen vorbestimmten Geschwindigkeitsschwellenwert überschreitet.

4. Elektrisches Bremssystem nach einem der vorhergehenden Ansprüche, bei dem die Konfigurationsmittel (10) ausgebildet sind, um ein Bremsgesetz zu modifizieren, das in den Steuermitteln (7) implementiert wird, um die Steuermittel (7) zu konfigurieren.

5. Elektrisches Bremssystem nach Anspruch 4, bei dem die Modifikation des Bremsgesetzes darin besteht, Parameter des Bremsgesetzes zu modifizieren, wobei die genannten Parameter eine maximale Steuerung (C_{M1}, C_{M2}) umfassen, welche eine Kraftsteuerung begrenzt, die dazu bestimmt ist, den elektromechanischen Aktor (5) zu steuern, sowie einen Sättigungsschwellenwert (Sₛₐₜ₁, Sₛₐₜ₂) für eine Stromsteuerung des Elektromotors des elektromechanischen Aktors.

6. Luftfahrzeug, umfassend ein elektrisches Bremssystem nach einem der vorhergehenden Ansprüche.

7. Bremsverfahren, das in einem elektrischen Bremssystem nach einem der Ansprüche 1 bis 5 durchgeführt wird, umfassend die Schritte:
- Erfassen, ob sich das Luftfahrzeug in einer Situation, die einem möglichen Startabbruch (RTO) des Luftfahrzeugs vorausgeht, befindet oder nicht;
- wenn sich das Luftfahrzeug nicht in einer solchen Situation befindet, Veranlassen, dass die Steuermittel (7) von den Konfigurationsmitteln (10) gemäß dem ersten Modus konfiguriert werden;
- wenn sich das Luftfahrzeug in einer solchen Situation befindet, Veranlassen, dass die Steuermittel (7) von den Konfigurationsmitteln (10) gemäß dem zweiten Modus konfiguriert werden.

## Claims

1. An electric braking system (1) for braking an aircraft wheel (2), the system comprising:
• a brake (3) comprising friction members (4) and at least one electromechanical actuator (5) designed in such a manner that when it applies a controlled braking force on the friction members (4) that is less than or equal to a first maximum threshold, no functional or structural degradation of the electromechanical actuator (5) occurs, and when it applies a controlled braking force on the friction members (4) that is greater than the first maximum threshold but less than or equal to a second maximum threshold, functional and/or structural degradation is likely to occur, but without preventing the electromechanical actuator (5) from applying the controlled braking force; and
• control means (7) arranged to produce a control current for powering an electric motor of the electromechanical actuator (5);
the control means (7) being configurable to occupy a first mode in which the control current is such that the controlled braking force cannot exceed the first maximum threshold, and to occupy a second mode in which the control current is such that the controlled braking force can reach the second maximum threshold; and
• in that the electric braking system includes configuration means (10) arranged to configure the control means (7) to occupy the second mode when in a situation preceding a potential interruption of takeoff (RTO) of the aircraft, and otherwise to occupy the first mode.

2. An electric braking system according to claim 1, wherein the configuration means (10) are arranged to configure the control means (7) to occupy the second mode prior to each takeoff of the aircraft.

3. An electric braking system according to claim 1, wherein the configuration means (10) are arranged to configure the control means (7) to occupy the second mode during each takeoff, whenever the ground speed (Vₛ) of the aircraft exceeds a predetermined speed threshold.

4. An electric braking system according to any preceding claim, wherein the configuration means (10) are arranged to modify a braking relationship implemented in the control means (7) in order to configure the control means (7) .

5. An electric braking system according to claim 4, wherein modification of the braking relationship consists in modifying parameters of the braking relationship, said parameters comprising a maximum command (C_{M1}, C_{M2}) that limits a force command for controlling the electromechanical actuator (5), and a saturation threshold (Sₛₐₜ₁, Sₛₐₜ₂) for a current command of the electric motor of the electromechanical actuator.

6. An aircraft including an electric braking system according to any preceding claim.

7. A braking method performed in an electric braking system according to any one of claims 1 to 5, the method comprising the steps of:
• detecting whether the aircraft is or is not in a situation preceding a potential interruption of takeoff (RTO) of the aircraft;
• if the aircraft is not in such a situation, causing the control means (7) to be configured by the configuration means (10) to occupy the first mode; and
• if the aircraft is in such a situation, causing the control means (7) to be configured by the configuration means (10) to occupy the second mode.
